# EUROPÄISCHE PATENTSCHRIFT

(11) **EP 0 834 437 B1**
(45) Veröffentlichungstag und Bekanntmachung des Hinweises auf die Patenterteilung: **07.11.2001**
(21) Anmeldenummer: 97116143.5
(22) Anmeldetag: 17.09.1997
(51) Int. Cl.: B62D 1/18

(54) **Kraftfahrzeug- Lenksäuleneinheit**
Motor vehicle steering column assembly
Ensemble d'une colonne de direction d'un véhicule automobile

(30) Priorität: 07.10.1996 DE 19641152
(43) Veröffentlichungstag der Anmeldung: 08.04.1998
(73) Patentinhaber: Nacam Deutschland GmbH, 49448 Lemförde (DE)
(72) Erfinder: Grams, Kai-Uwe, 49692 Cappeln (DE)

(56) Entgegenhaltungen:
- DE-A- 4 217 664

## Beschreibung

Die Erfindung betrifft eine Kraftfahrzeuglenksäuleneinheit mit einem Lenksäulengehäuse und darin angeordneter Lenksäule und einer elektrisch angetriebenen Verstellvorrichtung zur Längsverstellung und Neigungsverstellung der Lenksäule.

Kraftfahrzeuglenksäuleneinheiten sind bekannt und werden in großer Anzahl von der Automobilindustrie in Personenkraftwagen wie auch Lastkraftwaren eingebaut. Der prinzipielle Aufbau solcher Einheiten ist dadurch gekennzeichnet, daß üblicherweise für jede Verstellrichtung, d.h. sowohl für die Längsverstellung als auch für die Neigungsregulierung der Lenksäule je eine separate elektrische Antriebseinheit eingesetzt wird. Kraftfahrzeuglenksäuleneinheiten mit diesem Aufbau haben sich zwar in der Praxis bewährt, bedingen allerdings aufgrund ihres hohen Teilebedarfes und daraus resultierenden erhöhten Montagekosten insgesamt hohe Fertigungskosten. Ein zusätzlicher Nachteil des üblichen Aufbaus liegt darin, daß durch die einzelnen elektrischen Antriebseinheiten erheblicher Bedarf an Bauraum im Bereich der Kraftfahrzeuglenksäuleneinheit besteht. Darüber hinaus ist die bisher übliche Bauweise auch unter dem Gesichtspunkt möglicher Gewichtsreduzierungen als negativ zu beurteilen.

Aus der DE 42 17 664 A1 ist eine kipp- und / oder teleskopierbare Lenksäule nach dem Oberbegriff des Anspruchs 1 bekannt, die für jede dieser beiden Funktionen (kippen und teleskopieren) einen separaten oder für beide Funktionen nur einen Elektromotor benötigt. Dabei soll ein bürstenloser Gleichstrommotor verwendet werden. Diese Lenksäule weist zwei teleskopierbare Abschnitte und einen kippbaren Abschnitt auf. Die Kippbewegung erfolgt um eine Schwenkachse. Der Gleichstrommotor treibt eine axiale, mehrteilige Verstellspindel an, die über eine elektromagnetische Kupplung mit einem Verstellmechanismus in Eingriff steht, die bei Speisung ihrer Erregerwicklung bei rotierender Verstellspindel für eine Axialbewegung sorgt. Die Verstellspindel ist beispielsweise zweiteilig ausgeführt, wobei ein Universalgelenk zwischen den beiden Teilen eingesetzt ist, um eine Kippfunktion der Lenksäule zu gewährleisten. In einer derartigen Ausführung neigen gelenkige Verbindungen stets zu schnellerem Verschleiß, sodaß eine störungsfreie und geräuschlose Funktion der Lenksäule nur für einen begrenzten Zeitraum gewährleistet werden kann, sofern dies überhaupt möglich ist. Zweitens sind für derartige Lenksäulen zusätzliche Bauteile (Gelenk und zwei Verstellspindeln) erforderlich. Darüber hinaus kann bei einer derartigen Lenksäulenausführung der Fall eintreten, daß die Kippbewegung durch Selbsthemmung des Systems verhindert wird. Dies ist immer dann der Fall, wenn die Antriebsspindeln und die Lenksäule exakt parallel und in axialer Richtung verlaufen. Ein Kippen der Lenksäule ist dann erst möglich, wenn eine externe, von der Axialrichtung abweichende Kraft auf das System wirkt, die beispielsweise durch den Fahrzeugführer aufgebracht werden muß.

Aufgabe der vorliegenden Erfindung ist es daher, eine Kraftfahrzeuglenksäuleneinheit der gattungsgemäßen Art in einer Weise weiterzuentwickeln, daß ihr Aufbau vereinfacht sowie Herstellkosten, Raumbedarf und Gewicht gegenüber herkömmlichen Bauweisen deutlich reduziert werden.

Diese Aufgabe wird erfindungsgemäß durch die Merkmale des Anspruchs 1 gelöst.

Durch diese erfindungsgemäße Gestaltung ergibt sich der große Vorteil, daß für die gewünschte Verstellung in zwei unterschiedlichen Richtungen nunmehr nur noch eine elektrische Antriebseinheit erforderlich ist. Die jeweiligen Verstellmechanismen zur Längsbewegung und zur Neigungsbewegung der Lenksäule werden von einer gemeinsamen Verstellspindel angetrieben, wobei die Ansteuerung der Verstellmechanismen separat durch die Ein- und Ausschaltung der an den Verstellmechanismen angeordneten Schaltvorrichtungen vorgenommen werden kann. Es entfällt somit eine komplette elektrische Antriebseinheit mit all ihren oben geschilderten Platz-, Gewichts- und Kostennachteilen.

Spezielle Ausgestaltungen des Gegenstandes der Erfindung ergeben sich aus den Merkmalen der Unteransprüche.

Es hat sich insbesondere als vorteilhaft erwiesen, die Schaltvorrichtung mit einem Stift zu versehen, der durch einen Hubmagneten bewegbar ist und in eine korrespondierende Ausnehmung der Spindelmutter eingeführt werden kann. Sind mehrere der korrespondierenden Ausnehmungen auf der Umfangsfläche der Spindelmutteraußenseite konzentrisch zur Spindelmuttermittelachse angeordnet, ist jederzeit gewährleistet, daß bei Ansteuerung des Hubmagneten und der daraus resultierenden Bewegung des Stiftes eine entsprechende Ausnehmung auf der Spindelmutteraußenseite der Stiftspitze gegenüberliegt. Die Ausnehmungen auf der Umfangsfläche lassen sich besonders kostengünstig und in ihrer Funktion zuverlässig dadurch gestalten, daß der Spindelmutteraußenseite in einem entsprechenden Bereich die geometrische Form einer Verzahnung gegeben wird. Hierdurch ist gewährleistet, daß der die Einführbewegung ausführende Stift automatisch entlang einer Zahnflankenfläche in eine entsprechende Zahnlücke, die im Zusammenwirken mit dem Stift die kraftschlüssige Verbindung zwischen Spindelmutter und Verstellmechanismus herstellt, hineingleitet.

Natürlich ist es denkbar, auch andere Schaltvorrichtungen zur zeitweiligen festen Verbindung zwischen Verstellmechanismus und Spindelmutter einzusetzen, die oben erwähnten Hubmagnete haben sich jedoch insbesondere aufgrund ihrer geringen Kosten, ihres Gewichtsvorteils sowie des geringen Bauraumbedarfs als besonders vorteilhaft erwiesen.

Der Bauraumbedarf der erfindungsgemäßen Kraftfahrzeuglenksäuleneinheit wird noch zusätzlich dadurch herabgesetzt, daß der Verstellmechanismus zur Längsbewegung der Lenksäule direkt über einen Verbindungshebel mit dem Lenksäulengehäuse verbunden ist.

Der Verstellmechanismus zur Neigungsbewegung der Lenksäule weist zweckmäßigerweise in Analogie zum Verstellmechanismus der Längsbewegung einen entsprechenden Kipphebel auf, in dem die Axiallagerung der korrespondierenden Spindelmutter festgelegt ist. Beide Verstellmechanismen bilden durch diese konstruktive Gestaltung besonders kompakte Baueinheiten mit entsprechenden Abmaßvorteilen.

Im Folgenden wird ein bevorzugtes Ausführungsbeispiel des Gegenstandes der Erfindung anhand der beigefügten Zeichnungen zum besseren Verständnis näher erläutert. Es zeigen:
- Figur 1: eine perspektivische Gesamtansicht der erfindungsgemäßen Kraftfahrzeuglenksäuleneinheit;

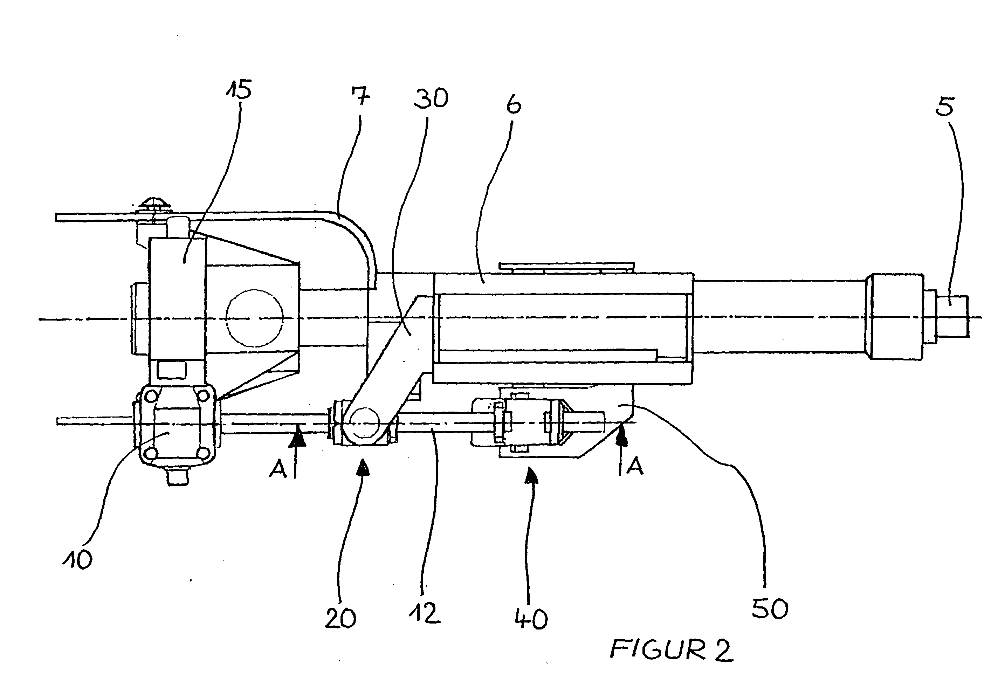

- Figur 2: eine Draufsicht auf die Kraftfahrzeuglenksäuleneinheit der Figur 1;

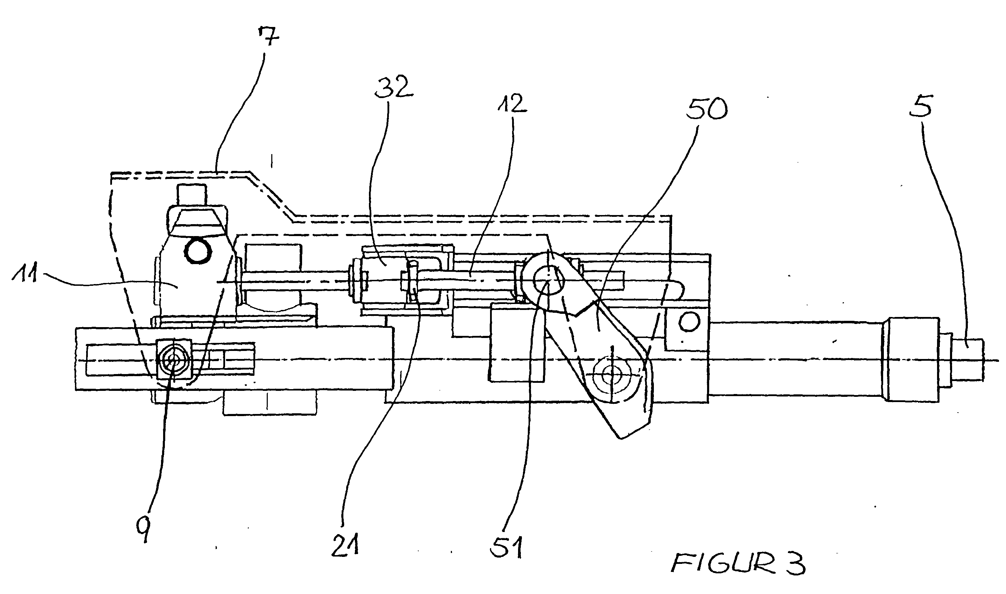

- Figur 3: eine Seitenansicht der Lenksäuleneinheit aus Figur 1 und 2;
- Figur 4: eine Schnittdarstellung entsprechend der Linie A-A in Figur 2.

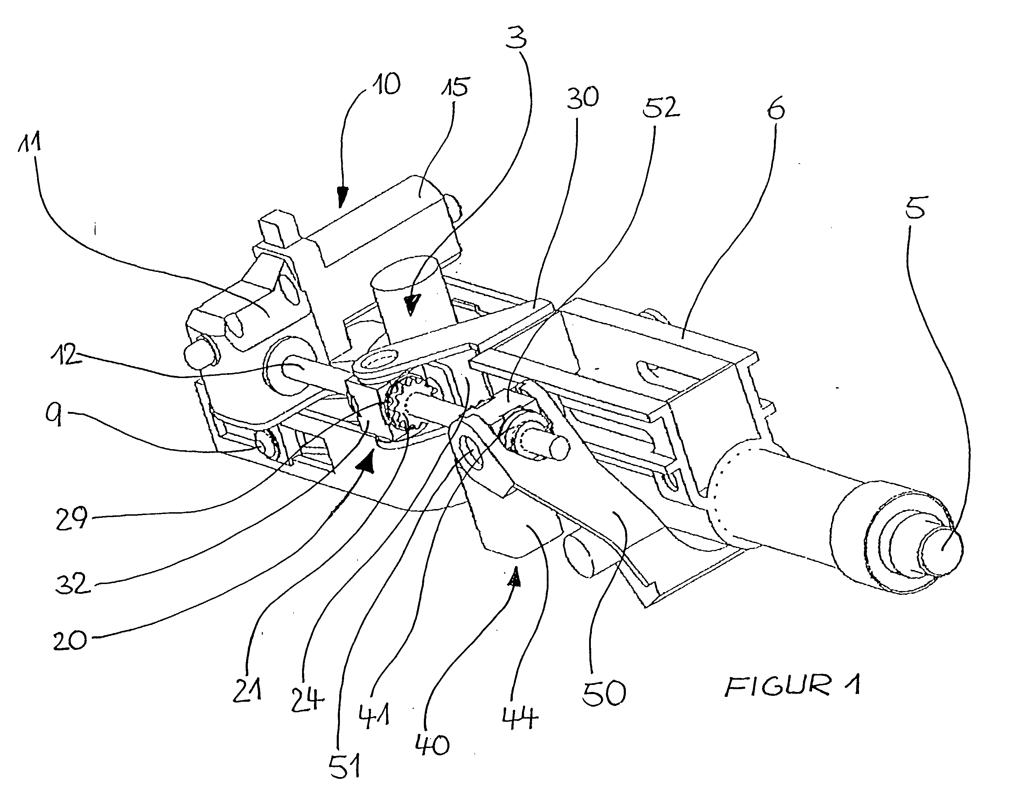

Die in der Figur 1 mit der Bezugsziffer 1 bezeichnete Kraftfahrzeuglenksäuleneinheit weist eine Lenksäule 5, ein Lenksäulengehäuse 6 und eine in ihrer Gesamtheit mit 3 bezeichnete Verstellvorrichtung auf, wobei die Verstelleinrichtung aus einer Antriebseinheit 10 und zwei Verstellmechanismen 20 und 40 besteht. Der Verstellmechanismus 20 dient in diesem Ausführungsbeispiel der Längsverstellung der Lenksäule 5, wohingegen der Verstellmechanismus 40 zur Neigungsverstellung der Lenksäule 5 dient.

Die Antriebseinheit 10 besteht im wesentlichen aus einer Elektromotor-Getriebebaueinheit 11 mit angeflanschtem Elektromotor 15 und hier nicht dargestellter innenliegender Spindellagerung. Die Antriebseinheit 10 dient zum Drehantrieb der Verstellspindel 12, die in der Elektromotor-Getriebebaueinheit 11 in axialer Längsrichtung der Spindelmittelachse festgelegt ist, so daß die Verstellspindel 12 nur eine Drehbewegung ausführen kann. Auf der Verstellspindel 12 sind nebeneinander zwei Spindelmuttern 21 beziehungsweise 41 angeordnet, wobei die Spindelmutter 21 zum Verstellmechanismus 20 der Längsverstellung und die Spindelmutter 41 zum Verstellmechanismus 40 für die Neigungsverstellung gehört. Die auf der Verstellspindel 12 angeordneten Spindelmuttern 21 und 41 werden von je einem Lagergehäuse 32 und 52 umfaßt. Das Lagergehäuse 32 gehört zum Verbindungshebel 30, welcher fest mit dem Lenksäulengehäuse 6 verbunden ist. Das Lagergehäuse 52 ist über ein Drehgelenk 51 mit dem Kipphebel 50 verbunden, welcher zur Neigungsverstellung des Lenksäulengehäuses 6 dient.

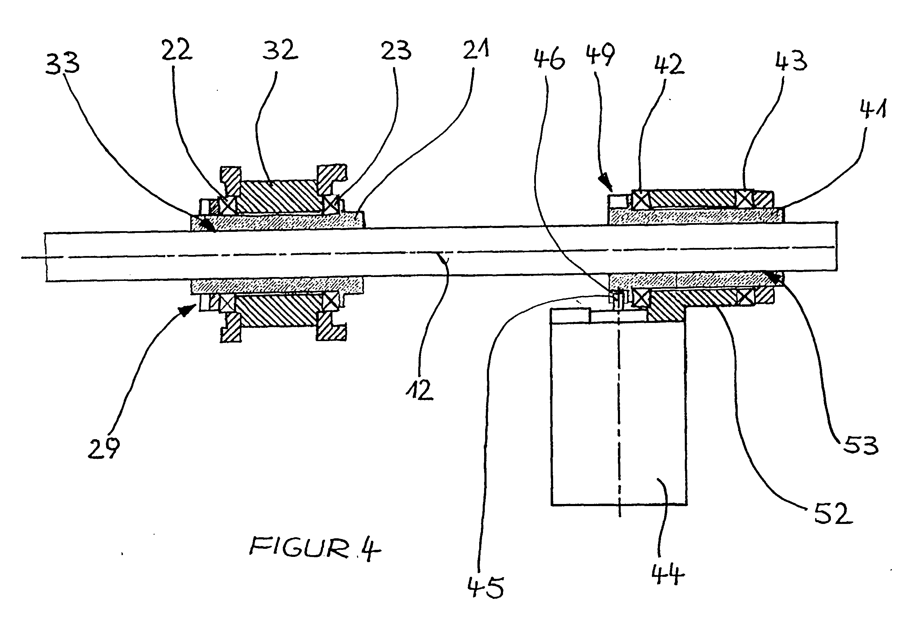

Insbesondere aus Figur 4 wird deutlich, daß sich innerhalb der Lagergehäuse 32 bzw. 52 im Abstand zueinander jeweils zwei Axiallager 22, 23 bzw. 42, 43 befinden. Die Axiallager dienen zur Lagerung der jeweiligen Spindelmuttern 21 und 41. Die Spindelmuttern sind mit jeweils einer Durchgangsbohrung 33 bzw. 53 versehen, in die ein mit dem Außengewinde der Verstellspindel 12 korrespondierendes Innengewinde eingeschnitten ist. Da das Reibmoment zwischen Verstellspindel und Spindelmuttern größer ist als das Reibmoment innerhalb der Axiallager 22, 23 bzw. 42, 43, bewirkt eine Drehbewegung der Verstellspindel 12 eine gleichgerichtete Drehbewegung der beiden Spindelmuttern 21 und 41, ohne daß eine Lageänderung der Gewindespindeln in axialer Längsrichtung der Spindelachse stattfindet.

Beide Verstellmechanismen 20 bzw. 40 sind mit jeweils einer Schaltvorrichtung 24 bzw. 44 versehen, die in dem hier dargestellten Beispiel als Hubmagnet ausgeführt sind. Die Schnittdarstellung der Figur 4 macht deutlich, daß die den jeweiligen Lagergehäusen 32 bzw. 52 benachbart angeordneten Hubmagnete jeweils einen Stift 25 bzw. 45 aufweisen, der aus dem Hubmagnetgehäuse bei Ansteuerung des Hubmagneten in Richtung auf die Mittelachse der Antriebsspindel 12 ausfahrbar ist. In der Figur 4 ist die Schaltvorrichtung 44 bei angelegter Schaltspannung dargestellt, in der der Stift 45 des Hubmagnetes in eine korrespondierende Ausnehmung 46 der Spindelmutter 41 eingreift.

In dem hier dargestellten Ausführungsbeispiel sind, wie dies insbesondere auch die Figur 1 zeigt, konzentrisch an der Umfangsfläche 27 bzw. 47 der Spindelmuttern 21 und 41 mehrere einzelne Ausnehmungen 26 und 46 angeordnet, die zusammen eine verzahnungsähnliche Geometrie 29 bzw. 49 bilden. Die Anordnung der einzelnen Ausnehmungen in Form einer Verzahnung erleichtert das Eingreifen des korrespondierenden Stiftes 25 bzw. 45 in die der Stiftspitze gegenüberliegende Ausnehmung der Spindelmuttern 21 bzw. 41.

Sobald einer der Hubmagneten elektrisch angesteuert worden ist und der zugehörige Stift 25 bzw. 45 in eine der Ausnehmungen 26 bzw. 46 eingefahren ist, wird hierdurch eine kraftschlüssige Verbindung zwischen Spindelmutter 21, 41 und dem zugehörigen Verbindungshebel 30 bzw. dem Kipphebel 50 hergestellt. Durch diesen Eingriff wird eine Rotationsbewegung der Spindelmutter blockiert, so daß eine gleichzeitige Drehung der Antriebsspindel zwangsläufig zu einer axialen Bewegung der Spindelmutter 21, 41 auf der Antriebsspindel 12 führt. Diese axiale Bewegung wiederum führt durch den Verstellmechanismus 20 zu einer axialen Verschiebung des Lenksäulengehäuses 6, wohingegen eine axiale Verschiebung der Spindelmutter 41 über den Kipphebel 50 zu einer Neigungsverstellung der Lenksäule führt. Da beide Hubmagnete einzeln für sich ansteuerbar sind, kann sowohl eine getrennte Verstellung der Lenksäule in Längsrichtung oder Neigungsrichtung als auch eine gemeinsame und gleichzeitige Verstellung in beiden Richtungen erfolgen, je nach dem, ob nur einer oder beide Hubmagnete elektrisch angesteuert werden.

Für die Neigungsverstellung der Lenksäule ist es notwendig, daß die gesamte Kraftfahrzeuglenksäuleneinheit um einen Drehpunkt 9, der sich in diesem Ausführungsbeispiel unterhalb der Antriebseinheit 10 befindet, drehbar ist.

In diesem Ausführungsbeispiel sind die beiden Verstellmechanismen 20 und 40 für die Neigungs- und Längsverstellung hintereinander in einem Seitenbereich der Verstellspindel angeordnet, die Antriebseinheit für die Verstellspindel 12 befindet sich an dem den Verstellmechanismen 20 bzw. 40 abgewandten anderen Ende der Verstellspindel 12. Sollten die Einbauerfordernisse für die hier beispielhaft dargestellte erfindungsgemäße Kraftfahrzeuglenksäuleneinheit es notwendig machen, ist selbstverständlich auch eine Einbaulage der Antriebseinheit 10 dergestalt denkbar, daß jeweils ein Verstellmechanismus 20 bzw. 40 an einer Seite der Antriebseinheit 10 plaziert wird. Die Antriebseinheit 10 wäre somit zwischen den beiden Verstellmechanismen 20 bzw. 40 angeordnet, die Lagerung der Antriebsspindel 12 somit mittig zwischen den Verstellmechanismen für die Längs- bzw. Neigungsverstellung innerhalb der Elektromotor-Getriebebaueinheit 11 verwirklicht.

Aus den beigefügten Zeichnungen wird deutlich, daß bis auf die Geometrie des Kipphebels 50 und des Verbindungshebels 30 die beiden Verstellmechanismen 20 bzw. 40 baugleich gestaltet werden können, es ergibt sich somit eine Kosteneinsparung durch Verwendung gleicher Spindelmuttern, gleicher Lagerungen sowie gleicher Schaltvorrichtungen in Form handelsüblicher Hubmagnete.

### Bezugszeichenliste:

- 1.: Kraftfahrzeuglenksäuleneinheit
- 3.: Verstellvorrichtung
- 5.: Lenksäule
- 6.: Lenksäulengehäuse
- 7.: Konsole
- 9.: Drehpunkt
- 10.: Antriebseinheit
- 11.: Elektromotor-Getriebebaueinheit
- 12.: Verstellspindel
- 15.: Motor
- 20.: Verstellmechanismus Längsverstellung
- 21.: Spindelmutter
- 22.: Axiallager
- 23.: Axiallager
- 24.: Schaltvorrichtung
- 25.: Stift
- 26.: Ausnehmung
- 27.: Umfangsfläche
- 29.: Verzahnung
- 30.: Verbindungshebel
- 32.: Lagergehäuse
- 33.: Durchgangsbohrung
- 40.: Verstellmechanismus Neigungsverstellung
- 41.: Spindelmutter
- 42.: Axiallager
- 43.: Axiallager
- 44.: Schaltvorrichtung
- 45.: Stift
- 46.: Ausnehmung
- 47.: Umfangsfläche
- 49.: Verzahnung
- 50.: Kipphebel
- 51.: Drehgelenk
- 52.: Lagergehäuse
- 53.: Durchgangsbohrung

## Patentansprüche

1. Kraftfahrzeuglenksäuleneinheit (1) mit einem Lenksäulengehäuse (6) und darin angeordneter Lenksäule (5) und einer elektrisch angetriebenen Verstellvorrichtung (3) zur Längsverstellung und Neigungsverstellung der Lenksäule (5), wobei die Verstellvorrichtung (3) eine elektrische Antriebseinheit (10) zum Drehantrieb einer Verstellspindel (12) und zur Längsbewegung und zur Neigungsbewegung mindestens je einen Verstellmechanismus (20, 40) sowie je Bewegungsrichtung eine Schaltvorrichtung (24, 44) und eine zu dieser benachbart angeordnete Spindelmutter (21, 41) aufweist, wobei zwischen der jeweiligen Schaltvorrichtung (24, 44) und der der Schaltvorrichtung benachbarten Spindelmutter (21, 41) eine kraftschlüssige Verbindung herstellbar ist, **dadurch gekennzeichnet, dass**
die Verstellspindel (12) einteilig ist und
die Spindelmuttern (21, 41) auf der einteiligen Verstellspindel (12) angeordnet und in Axialrichtung der Verstellspindel (12) beweglich gelagert sind.

2. Kraftfahrzeuglenksäuleneinheit nach Anspruch 1,
**dadurch gekennzeichnet, daß**
die Schaltvorrichtungen (24, 44) als ein mit einem bewegbaren Stift (25, 45) versehener Hubmagnet ausgeführt sind, wobei die Stifte (25, 45) in jeweils korrespondierende Ausnehmungen (26, 46) der Spindelmuttern (21, 41) einführbar sind.

3. Kraftfahrzeuglenksäuleneinheit nach Anspruch 2,
**dadurch gekennzeichnet, daß**
mehrere korrspondierende Ausnehmungen (26, 46) auf der Umfangsfläche (27, 47) der Spindelmutteraußenseite konzentrisch zur Spindelmuttermittelachse angeordnet sind.

4. Kraftfahrzeuglenksäuleneinheit nach Anspruch 3,
**dadurch gekennzeichnet, daß**
die Ausnehmungen die geometrische Form einer Verzahnung (29, 49) bilden.

5. Kraftfahrzeuglenksäuleneinheit nach Anspruch 1,
**dadurch gekennzeichnet, daß**
der Verstellmechanismus (20) zur Längsbewegung der Lenksäule direkt mit dem Lenksäulengehäuse (6) verbunden ist.

6. Kraftfahrzeuglenksäuleneinheit nach Anspruch 1,
**dadurch gekennzeichnet, daß**
der Verstellmechanismus (20) zur Längsbewegung der Lenksäule direkt mit dem Lenksäulengehäuse (6) verbunden ist, wobei die Axiallagerung der korrespondierenden Spindelmutter (22, 23) in einem Verbindungshebel (30) des Verstellmechanismus (20) aufgenommen ist.

7. Kraftfahrzeuglenksäuleneinheit nach Anspruch 1,
**dadurch gekennzeichnet, daß**
der Verstellmechanismus (40) zur Neigungsbewegung der Lenksäule einen Kipphebel (50) aufweist, in dem die Axiallagerung (42, 43) der korrespondierenden Spindelmutter (41) festgelegt ist.

8. Kraftfahrzeuglenksäuleneinheit nach einem oder mehreren der vorangegangenen Ansprüche,
**dadurch gekennzeichnet, daß**
die Antriebseinheit (10) eine Elektromotor-Getriebebaueinheit (11) mit integrierter Lagerung für die Verstellspindel (12) beinhaltet.

9. Kraftfahrzeuglenksäuleneinheit nach einem oder mehreren der vorangegangenen Ansprüche,
**dadurch gekennzeichnet, daß**
die Antriebseinheit (10) mit der Neigungsbewegung der Lenksäule um den Drehpunkt (9) schwenkbar ist.

## Claims

1. Motor vehicle steering column unit (1) comprising a steering column housing (6) with a steering column (5) disposed therein and an electrically driven adjusting apparatus (3) for adjusting the length and inclination of the steering column (5), wherein the adjusting apparatus (3) comprises an electrical drive unit (10) for setting an adjusting spindle (12) in rotation and at least one adjusting mechanism (20, 40) each for the lengthwise motion and the inclining motion as well as one control apparatus (24, 44) and, disposed adjacent to the latter, one spindle nut (21, 41) for each direction of motion, wherein a frictional connection may be established between the respective control apparatus (22, 24) and the spindle nut (21, 41) adjacent to the control apparatus, **characterized in that**
the adjusting spindle (12) is of a one-piece construction and the spindle nuts (21, 41) are disposed on the one-piece adjusting spindle (12) and supported so as to be movable in axial direction of the adjusting spindle (12).

2. Motor vehicle steering column unit according to claim 1,
**characterized in that**
the control apparatuses (24, 44) are designed as a solenoid actuator provided with a movable pin (25, 45), wherein the pins (25, 45) are introducible into in each case corresponding recesses (26, 46) of the spindle nuts (21, 41).

3. Motor vehicle steering column unit according to claim 2,
**characterized in that**
a plurality of corresponding recesses (26, 46) are disposed on the peripheral surface (27, 47) of the spindle nut exterior concentrically with the spindle nut centre line.

4. Motor vehicle steering column unit according to claim 3,
**characterized in that**
the recesses form the geometric shape of a tooth system (29, 49).

5. Motor vehicle steering column unit according to claim 1,
**characterized in that**
the adjusting mechanism (20) for the lengthwise motion of the steering column is connected directly to the steering column housing (6).

6. Motor vehicle steering column unit according to claim 1,
**characterized in that** the adjusting mechanism (20) for the lengthwise motion of the steering column is connected directly to the steering column housing (6), wherein the thrust bearing arrangement of the corresponding spindle nut (22, 23) is accommodated in a connecting lever (30) of the adjusting mechanism (20).

7. Motor vehicle steering column unit according to claim 1,
**characterized in that** the adjusting mechanism (40) for the inclining motion of the steering column comprises a rocking lever (50), in which the thrust bearing arrangement (42, 43) of the corresponding spindle nut (41) is fixed.

8. Motor vehicle steering column unit according to one or more of the preceding claims,
**characterized in that**
the drive unit (10) comprises an electric motor gear unit (11) with an integrated bearing arrangement for the adjusting spindle (12).

9. Motor vehicle steering column unit according to one or more of the preceding claims,
**characterized in that**
the drive unit (10) is capable of swivelling with the inclining motion of the steering column about the centre of rotation (9).

## Revendications

1. Unité de colonne de direction (1) pour véhicule automobile comportant un boîtier de colonne de direction (6) et une colonne de direction (5) située dans ce boîtier et un dispositif de réglage **(3)** actionné électriquement, servant à réaliser le réglage longitudinal et le réglage d'inclinaison de la colonne de direction (5), et dans laquelle le dispositif de réglage (3) porte une unité d'entraînement électrique (10) pour entraîner en rotation une broche de réglage (12) et pour déplacer longitudinalement et incliner au moins respectivement un mécanisme de réglage (20, 40) et, pour chaque direction de déplacement, un dispositif de commutation (21, 44), et un écrou de broche (20, 41) disposé au voisinage de ce dispositif, et dans laquelle une liaison de force peut être établie entre le dispositif de commutation respectif (24, 44) et l'écrou. de broche (21, 41) voisin du dispositif de commutation, **caractérisée en ce que**
la broche de réglage (12) est réalisée d'un seul tenant, et
les écrous de broche (21, 41) sont disposés sur la broche de réglage d'un seul tenant (12) et sont montés de manière à être déplaçables dans la direction axiale de la broche de réglage (12).

2. Unité de colonne de direction pour véhicule automobile selon la revendication 1, **caractérisée en ce que** les dispositifs de commutation (24, 44) sont agencés sous la forme d'un aimant de levage pourvu d'une tige déplaçable (25, 45), les tiges (25, 45) pouvant être introduites dans des évidements respectifs correspondants (26, 46) des écrous de broche (21, 41).

3. Unité de colonne de direction pour véhicule automobile selon la revendication 2, **caractérisée en ce que** plusieurs évidements correspondants (26, 46) sont disposés sur la surface périphérique (27, 47) du côté de la face extérieure de l'écrou de broche d'une manière concentrique à l'axe médian de l'écrou de broche.

4. Unité de colonne de direction pour véhicule automobile selon la revendication 3, **caractérisée en ce que** les évidements fournissent la forme géométrique d'une denture (29, 49).

5. Unité de colonne de direction pour véhicule automobile selon la revendication 1, **caractérisée en ce que** le mécanisme de réglage (20) est relié directement au boîtier (6) de la colonne de direction, pour le déplacement longitudinal de la colonne de direction.

6. Unité de colonne de direction pour véhicule automobile selon la revendication 1, **caractérisée en ce que** le mécanisme de réglage (20) est relié directement au boîtier (6) de la colonne de direction pour déplacer longitudinalement la colonne de direction, le système de tourillonnage axial de l'écrou de broche correspondant (22, 23) étant logé dans un levier de liaison (30) du mécanisme de réglage (20).

7. Unité de colonne de direction pour véhicule automobile selon la revendication 1, **caractérisée en ce que** le mécanisme de réglage (40) possède, pour le mouvement d'inclinaison de la colonne de direction, un levier basculant (50), dans lequel est fixé le système de tourillonnage axial (42, 43) de l'écrou de broche correspondant (41).

8. Unité de colonne de direction pour véhicule automobile selon une ou plusieurs des revendications précédentes, **caractérisée en ce que** l'unité d'entraînement (10) contient une unité de construction moteur électrique - mécanisme (11) comportant un support intégré pour la broche de réglage (12).

9. Unité de colonne de direction pour véhicule automobile selon une ou plusieurs des revendications précédentes, **caractérisée en ce que** l'unité d'entraînement (10) peut pivoter, lors du mouvement d'inclinaison de la colonne de direction, autour du centre de rotation (9).
